# EUROPÄISCHE PATENTSCHRIFT

(11) **EP 2 440 368 B1**
(45) Veröffentlichungstag und Bekanntmachung des Hinweises auf die Patenterteilung: **17.04.2013**
(21) Anmeldenummer: 10747806.7
(22) Anmeldetag: 10.06.2010
(51) Int. Cl.: B23Q 7/14

(54) **WERKSTÜCKTRÄGER UND TRANSPORTSYSTEM**
WORKPIECE CARRIER AND TRANSPORT SYSTEM
PORTE-PIÈCES ET SYSTÈME DE TRANSPORT

(30) Priorität: 10.06.2009 DE 102009025041
(43) Veröffentlichungstag der Anmeldung: 18.04.2012
(73) Patentinhaber: Waldorf Technik GmbH & Co. KG, 78234 Engen (DE)
(72) Erfinder: JAITER, Werner, 78256 Steisslingen (DE)
(74) Vertreter: Wagner, Kilian
(86) Internationale Anmeldenummer: PCT/EP2010/003479
(87) Internationale Veröffentlichungsnummer: WO 2010/142442

(56) Entgegenhaltungen:
- EP-A1- 1 157 780
- EP-A1- 1 223 003
- FR-A1- 2 893 931

## Beschreibung

Die Erfindung betrifft ein Transportsystem mit mindestens einem Werkstückträger gemäß dem Oberbegriff des Anspruchs 1.

Werkstückträger dienen zum Transport von Werkstücken mit Hilfe von beispielsweise aus der DE 196 09 201 A1, der DE 42 29 067 A1 sowie der DE 10 2006 057 281 A1 bekannten Fördereinrichtungen. Üblicherweise werden die Werkstücke auf den Werkstückträgern auf Förderbändern zwischen unterschiedlichen Arbeitsstationen transportiert, an denen die Werkstücke auf den Werkstückträgern erarbeitet werden. An den Arbeitsstationen oder auch an vorgegebenen Haltepositionen werden die Werkstückträger mit dem jeweils darauf befindlichen Werkstücken gegen ein Stoppelement gefördert, so dass die Werkstückträger nicht mehr gemeinsam mit dem Förderband in eine Transportrichtung weiter bewegt werden, sondern das Förderband unter dem Werkstückträger entlanggleitet. Insbesondere bei schweren Werkstücken kann es vorkommen, dass die Haftreibung zwischen dem flächig auf dem Förderband aufliegenden Werkstückträger und dem Förderband so groß ist, dass das Förderband sich nicht relativ zum Werkstückträger bewegen kann, so dass es zu einem Aufstauen oder einer Beschädigung des Förderbandes und/oder zu einer Überlastung des Antriebsmotors des Förderbandes kommen kann. Wird die Haftreibung bei sehr schweren Werkstücken überwunden, kann aus dem hohen Gewicht des Werkstückes auch eine extrem hohe Gleitreibung zwischen dem Förderband und dem flächig aufliegenden Werkstückträger resultieren, was ebenfalls zu einer unzulässigen Belastung des Förderbandes und/oder des Antriebsmotors des Förderbandes führen kann.

Aus der DE 100 31 926 A1 ist ein Werkstückträger bekannt, der erste Auflageflächen zum Abstützen auf ein Förderband aufweist, die von Abstützelementen gebildet sind und zweite Auflageflächen, die von drehbar gelagerten Rollen gebildet sind. Aus Spalte 2, Zeilen 38 bis 43 des Dokumentes ergibt sich, dass die Abstützelemente derart angeordnet sind, dass ein Kippen des Werkstückträgers um die Achsen der Räder verhindert wird. Hierdurch soll sichergestellt sein, dass der Werkstückträger zu jeder Zeit exakt horizontal ausgerichtet ist. Bei dem Werkstückträger handelt es sich um einen üblicherweise nicht in Kombination mit einem Förderband eingesetzten Werkstückträger, da der Werkstückträger einen eigenen Antriebsmotor zum rotatorischen Antreiben der Räder aufweist. Den Rädern kommt somit in erster Linie keine Abstütz- bzw. Auflagefunktion, sondern eine Antriebsfunktion zu. Die Abstützfunktion wird von insgesamt vier Abstützelementen übernommen, die auf zwei Seiten der Räder verteilt angeordnet sind.

Aus der EP 1 157 780 A1 ist ein Werkstückträger mit einer ersten Auflagefläche zur Auflage auf einem Förderband bekannt, wobei zusätzlich zu der ersten Auflagefläche eine zweite Auflagefläche zur Auflage auf dem Förderband vorgesehen ist, welche von einer drehbar gelagerten Rolle gebildet ist. Insgesamt umfasst der Werkstückträger auf beiden Längsseiten eine Vielzahl von Rollen, die über die Längserstreckung des Werkstückträgers zueinander beabstandet sind. Der Werkstückträger stützt sich gleichzeitig auf sämtlichen Rollenpaaren ab, wodurch die Reibung reduziert wird. Zusätzlichen Reibreduzierung sind weitere Rollen vorgesehen, die im Bereich der Längsseitenwände des Werkstückträgers angeordnet sind.

Zum weiteren Stand der Technik werden die DE 1 756 438 sowie die DE 10 2009 011 188 A1 und die EP 1 223 003 A1 genannt.

Die FR-A-2893931 zeigt ein Transportsystem, bei welchem eine erste und eine zweite Auflagefläche vorgesehen sind. Die zweite Auflagefläche zur Auflage auf ein Förderband wird von einer Rolle gebildet, die in Transportrichtung hinter der ersten Auflagefläche angeordnet ist.

Der Erfindung liegt daher die Aufgabe zugrunde, ein verbessertes Transportsystem, umfassend einen Werkstückträger zur Verwendung mit mindestens einem Förderband des Transportsystems anzugeben, der zum Transport von großen Lasten geeignet ist. Insbesondere soll durch den Einsatz des erfindungsgemäßen Transportsystems eine Überbeanspruchung des Förderbandes sowie eines Antriebsaggregates für das Förderband vermieden werden.

Diese Aufgabe wird mit den Merkmalen des Anspruchs 1 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, nicht wie im Stand der Technik nur eine einzige, dort großflächige Auflagefläche zur Auflage des Werkstückträgers auf dem mindestens einen, vorzugsweise auf zwei parallelen, voneinander beabstandeten in einer gemeinsamen Ebene befindlichen Förderbändern vorzusehen, sondern mindestens zwei, vorzugsweise ausschließlich zwei, derartige Auflageflächen pro Förderband. Bevorzugt ist ein einziges (gemeinsames) Förderband für die mindestens zwei Auflageflächen vorgesehen. Dabei unterscheiden sich die in Transportrichtung hintereinander angeordneten Auflageflächen hinsichtlich ihrer Ausbildung vorzugsweise derart, dass die Auflageflächen einer Relativbewegung des Förderbandes relativ zum, insbesondere beladenen, Werkstückträger einen unterschiedlichen Widerstand entgegensetzen. Dadurch, dass die zweite Auflagefläche als Rolle ausgebildet, bzw. von mindestens einer Rolle, vorzugsweise von zwei Rollen, gebildet ist, kann bei einer Relativbewegung des Förderbandes relativ zum Werkstückträger, wenn der Werkstückträger gegen ein Stoppelement oder einen bereits gestoppten Werkstückträger transportiert wird, die zweite Auflagefläche bzw. die Rolle auf dem Förderband abrollen und setzt der Relativbewegung dadurch im Wesentlichen nur einen Rollwiderstand (Rollreibung) entgegen, während das Förderband bevorzugt entlang der ersten Auflagefläche gleitet. Bei einem nach dem Konzept der Erfindung ausgebildeten Werkstückträger hat die erste Auflagefläche vor allem die Funktion einer ausreichenden Haftkraft zwischen Werkstückträger und Förderband sicherzustellen, wenn der Werkstückträger gemeinsam mit dem Förderband, d.h. ohne Relativbewegung zu diesem, transportiert wird. Die zweite Auflagefläche hat hingegen in erster Linie die Funktion, die Widerstandskraft des Werkstückträgers gegen eine Relativbewegung des Werkstückträgers zum Förderband zu reduzieren, wenn der Werkstückträger angehalten oder dessen Bewegung relativ zum Förderband verlangsamt wird. Ein nach dem Konzept der Erfindung ausgebildeter Werkstückträger zeichnet sich also durch eine ausreichende Haftkraft im Transportfall und durch eine minimierte Widerstandskraft im Relativbewegungsfall vor, so dass, insbesondere bei schweren Lasten, eine Überlastung des band-, gurt- oder kettenförmigen Förderbandes sowie ein Überlastung eines Antriebsaggregates, insbesondere eines Elektromotors des mindestens einen Förderbandes, vermieden wird.

Im Hinblick auf die konkrete Ausbildung der ersten Auflagefläche gibt es unterschiedliche Möglichkeiten. Besonders bevorzugt ist die erste Auflagefläche derart ausgebildet, dass diese bei einer Relativbewegung zwischen Förderband und Werkstückträger entlang des Werkstückträgers gleitet. Erfindungsgemäß wird die erste Auflagefläche von einer Unterkante des Werkstückträgers, von einer hinteren Kante, oder einem flächigen Unterseitenabschnitt des Werkstückträgers gebildet.

Idealerweise liegt der Werkstückträger nicht in jedem Betriebszustand planeben auf dem Förderband auf, sondern ist derart ausgebildet, dass dieser, wenn der Werkstückträger gestoppt und das Förderband relativ zum Werkstückträger weiter bewegt wird, um eine Drehachse (Kippachse), vorzugsweise nach vorne, d.h. in Transportrichtung etwas verkippen kann, um somit die Lastenverteilung auf die beiden Auflageflächen zu verändern, bevorzugt derart, dass die zweite Auflagefläche im Vergleich zum Transportfall im Stoppfall höher belastet wird. Bei der Kippachse handelt es sich dabei bevorzugt um die Drehachse der mindestens einen Rolle.

Bevorzugt handelt es sich bei dem nach dem Konzept der Erfindung ausgebildeten Werkstückträger um einen eigenantriebsfreien Werkstückträger - d.h. die Rollen sind nicht aktiv von einem integralen Motor angetrieben sondern dienen zum einen lediglich zur verkippbaren Lagerung des Werkstückträgers und ermöglichen zum anderen im Falle des Fahrens des Werkstücksträgers gegen einen Stopp, dass sich das Förderband möglichst reibungsarm unterhalb des Werkstückträgers hindurch bewegt, wobei hierbei durch die Relativbewegung zwischen Förderband und Werkstückträger die Rollen rotatorisch von dem Förderband, d.h. von außen und nicht mit einem eigenen Motor des Werkstückträgers angetrieben werden.

In Weiterbildung der Erfindung ist mit Vorteil vorgesehen, dass die erste und die zweite Auflagefläche aus einem voneinander unterschiedlichen Material ausgebildet sind, wobei sich das Material der zweiten Auflagefläche bevorzugt durch einen geringeren Reibwert im Vergleich zum Material der ersten Auflagefläche auszeichnet.

Ganz besonders bevorzugt ist eine Ausführungsform des Werkstückträgers, bei der die erste und die zweite Auflagefläche in Transportrichtung voneinander beabstandet sind, wobei es erfindungsgemäß ist, wenn die zweite Auflagefläche in Transportrichtung vor der ersten Auflagefläche angeordnet ist. Besonders bevorzugt ist es dabei, wenn der Werkstückträger in einem Bereich zwischen der ersten und der zweiten Auflagefläche das Förderband nicht berührt. Noch weiter bevorzugt ist es, wenn außer den beiden Auflageflächen keine weitere Auflagefläche pro Förderband vorgesehen ist.

Wesentlich ist, dass die erste Auflagefläche und die zweite Auflagefläche im Normalbetrieb, d.h. immer dann, wenn der

Werkstückträger nicht auf einen Stopp aufläuft, in einer gemeinsamen Ebene auf mindestens einem, vorzugsweise ausschließlich einem, gemeinsamen Förderband aufliegen. Ganz besonders bevorzugt ist die erste Auflagefläche von dieser gemeinsamen Ebene beabstandet, wenn der Werkstückträger um eine vorzugsweise mindestens zwei Rollen tragende Achse bzw. Welle verkippt wird, vorzugsweise derart, dass der Werkstückträger bzw. die Werkstückauflagefläche des Werkstückträgers parallel zu der Ebene ausgerichtet ist. Bevorzugt ist dieser Abstand bei einer Parallelausrichtung des Werkstückträgers, insbesondere von dessen Oberseite, zu dem Förderband aus einem Wertebereich zwischen 1mm und 1cm, vorzugsweise zwischen 2mm und 0,5cm gewählt.

Über die Wahl des Abstandes der Drehachse der Rolle zur axialen Mitte des Werkstückträgers und/oder bevorzugt zum Masseschwerpunkt des, vorzugsweise beladenen, Werkstückträgers kann die Lastverteilung auf die beiden Auflageflächen eingestellt werden. Je weiter die Drehachse von der axialen Mitte bzw. zum Masseschwerpunkt beabstandet ist, desto grö-βer ist der Lastenanteil auf die erste Auflagefläche, d.h. umso größer ist zum einen die Haftreibung im Transportfall und umso größer ist der Gesamtwiderstand bei einer Relativbewegung zwischen Werkstückträger und Förderband.

Ganz besonders bevorzugt ist eine Ausführungsform, bei der der Werkstückträger zum gleichzeitigen Aufliegen auf mehreren, vorzugsweise zwei, parallelen Förderbändern ausgebildet ist, wobei es ganz besonders bevorzugt ist, wenn der Werkstückträger auf jedem Förderband mit mindestens zwei, vorzugsweise ausschließlich zwei, Auflageflächen aufliegt, von denen jeweils eine als Rolle ausgebildet ist. Insbesondere dann, wenn der Werkstückträger um eine Kippachse, vorzugsweise um die Drehachse, mindestens einer Rolle verkippbar sein soll, ist es bevorzugt, die erste und die zweite Auflagefläche auf einem unterschiedlichen Höhenniveau, d.h. in einem unterschiedlichen Abstand von einer von den Auflageflächen abgewandten Transportfläche (Oberseite) zur Auflage des Werkstücks angeordnet sind. Im Falle der Ausbildung der zweiten Auflagefläche als Rolle ist es bevorzugt, wenn die Höhendifferenz zwischen den beiden Auflageflächen geringer ist, vorzugsweise wesentlich geringer ist als der Radius der die zweite Auflagefläche bildenden Rolle.

Die Erfindung führt auf ein Transportsystem, umfassend mindestens einen, vorzugsweise mehrere wie zuvor beschrieben ausgebildete, Werkstückträger sowie mindestens ein Förderband, vorzugsweise mindestens zwei parallel Förderbänder, zur gleichzeitigen Auflage des mindestens einen Werkstückträgers.

Ganz besonders bevorzugt ist eine Ausführungsform des Transportsystems, bei der der Werkstückträger zur gleichzeitigen Auflage auf zwei parallelen, vorzugsweise quer zur Transportrichtung beabstandeten, Förderbändern mit jeweils mindestens zwei, vorzugsweise mit jeweils ausschließlich zwei, Förderbändern aufliegt, wobei es noch weiter bevorzugt ist, wenn die zweiten Auflageflächen von jeweils einer oder alternativ von einer gemeinsamen, sich quer zur Transportrichtung erstreckenden Rolle gebildet sind.

In Weiterbildung der Erfindung ist mit Vorteil vorgesehen, dass die Drehachse der mindestens einen Rolle des Werkstückträgers mit Axialabstand zur axialen Mitte des Werkstückträgers und ganz besonders bevorzugt mit Axialabstand zum Masseschwerpunkt des, vorzugsweise mit einem Werkstück beladenen, Werkstückträgers angeordnet ist, noch weiter bevorzugt derart, dass der Werkstückträger um die Drehachse der Rolle zu Zwecken der Veränderung der Lastverteilung verkippen kann.

Besonders bevorzugt umfasst das Transportsystem ein gemeinsames Förderband zur gleichzeitigen Auflage der ersten und der zweiten Auflagefläche. Im Falle des Vorsehens mehrerer paralleler Förderbänder befinden sich diese bevorzugt zur Bildung einer gemeinsamen Auflageebene in einer gemeinsamen Ebene. Dabei liegen die erste und die zweite Auflagefläche bevorzugt im Normalbetrieb, d.h. dann, wenn der Werkstückträger nicht um eine sich quer zu der Förderrichtung erstreckenden Achse verkippt ist, auf der gemeinsamen Ebene auf dem mindestens einen, vorzugsweise ausschließlich einen, gemeinsamen Förderband auf. Zu diesem Förderband bzw. zu dieser Ebene kann die erste Auflagefläche beabstandet sein, wenn der Werkstückträger um die vorgenannte Achse verkippt ist, beispielsweise weil der Werkstückträger gegen einen Stopp läuft. Bevorzugt ist die erste Auflagefläche von dieser Ebene beabstandet, wenn der Werkstückträger bzw. eine obere Werkstückauflagefläche (Transportfläche) parallel zu der von dem mindestens einen Förderband gebildeten Ebene ausgerichtet ist. Bevorzugt beträgt dieser Abstand bei parallel ausgerichtetem Werkstückträger zwischen etwa 1mm und 1cm, vorzugsweise zwischen etwa 2mm und 0,5cm, noch weiter bevorzugt beträgt der Abstand zwischen etwa 3mm und etwa 20mm.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine perspektivische Ansicht eines Werkstückträgers von schräg unten,
- Fig. 2a:: eine Ansicht des Werkstückträgers gemäß Fig. 1 von unten,
- Fig. 2b:: eine Seitenansicht des Trägers gemäß Fig. 2a,
- Fig. 2c:: eine Schnittansicht entlang der Schnittlinie A-A gemäß Fig. 2b, und
- Fig. 2d:: eine Detailvergrößerung B aus Fig. 2c.

In den Figuren sind gleiche Elemente und Elemente mit der gleichen Funktion mit den gleichen Bezugszeichen gekennzeichnet.

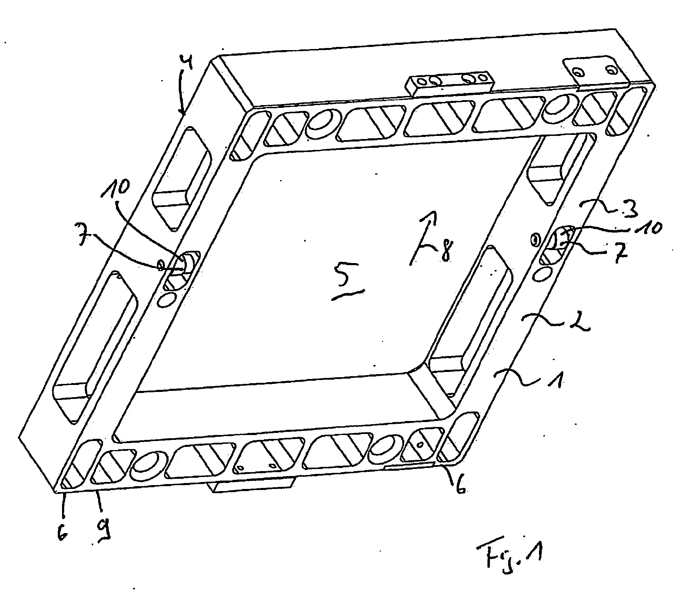

In den Fig. 1 bis 2d ist in unterschiedlichen, teilweise geschnittenen Ansichten eine bevorzugte, unter das Konzept der Erfindung fallende Ausführungsform eines Werkstückträgers 1 gezeigt. Der Werkstückträger 1 umfasst einen umfangsgeschlossenen, im Wesentlichen rechteckringförmigen Rahmen 2, welcher eine Unterseite 3 und eine von der Unterseite 3 abgewandte Oberseite 4 bildet. In Funktion, d.h. bei einer Anordnung des Werkstückträgers 1 auf zwei nicht dargestellten Förderbändern ist die Unterseite 3 den Förderbändern zugewandt und die von der Unterseite 3 abgewandte Oberseite 4 dient zur Auflage eines Werkstücks, welches an Arbeitsstationen von allen Seiten und bei Bedarf auch von unten durch eine von dem Rahmen 2 begrenzte Öffnung 5 hindurch bearbeitet werden kann.

Der Werkstückträger 1 ist, wie erwähnt, zur Auflage auf zwei parallelen, nicht gezeigten, Förderbändern ausgebildet. Der Werkstückträger 1 liegt dabei auf jedem Förderband mit jeweils einer ersten Auflagefläche 6 und einer zweiten Auflagefläche 7 auf, wobei die erste Auflagefläche 6, in einer Transportrichtung 8 betrachtet, hinter der zweiten Auflagefläche 7 angeordnet und von einer hinteren Unterkante 9 des Rahmens 2 gebildet ist. Der Rahmen 2 kann alternativ aus Kunststoff oder Metall, vorzugsweise Leichtmetall, beispielsweise Aluminium, ausgebildet sein.

Die zweiten Auflageflächen 7 werden von jeweils einer drehbar gelagerten Rolle 10 gebildet, die im Falle einer Relativbewegung zwischen Werkstückträger 1 und den Förderbändern auf jeweils einem Förderband abrollen und somit der Relativbewegung im Wesentlichen nur einen Rollwiderstand entgegensetzen, wohingegen die Förderbänder entlang der ersten Auflagefläche 6 gleiten.

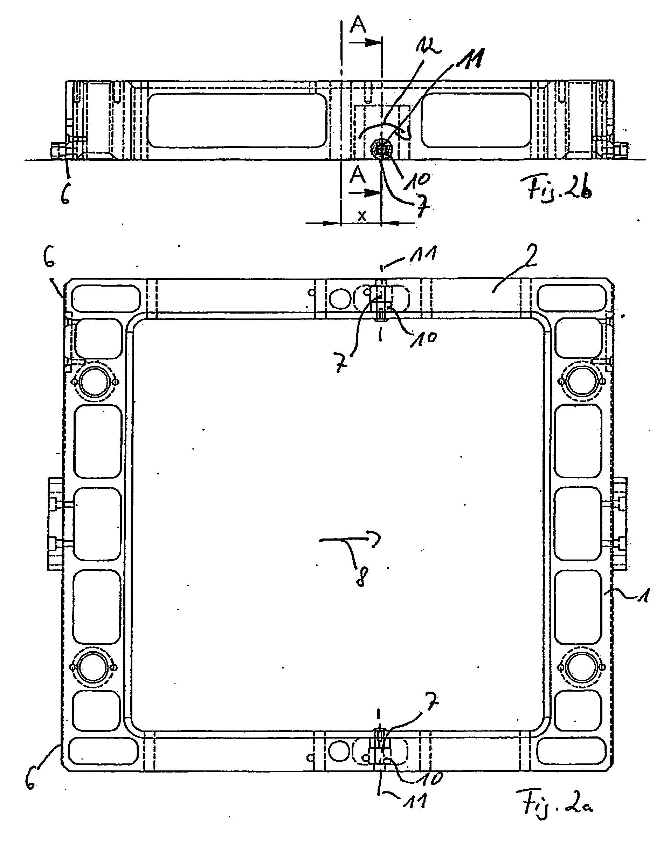

In Fig. 2a ist der Werkstückträger 1 in einer. Ansicht von unten gezeigt. Zu erkennen sind die jeweils um eine Drehachse 11 drehbar gelagerten Rollen 10, wobei sich die Drehachsen 11 senkrecht zur Transportrichtung 8 erstrecken. Die zweiten Auflageflächen 7 sind, zumindest näherungsweise, linienförmig und verlaufen parallel zu den Drehachsen 11.

In Fig. 2b ist der Werkstückträger 1, bezogen auf Fig. 2a, klapprichtig in einer Seitenansicht dargestellt. Zu erkennen ist, dass die Rollen 10 und damit die zweiten Auflageflächen 7 um den Abstand x beabstandet sind von der axialen Mitte des Werkstückträgers 1, die in dem gezeigten Ausführungsbeispiel näherungsweise mit dem Masseschwerpunkt des Werkstückträgers 1 zusammenfällt. Je größer der Abstand x gewählt ist, desto größer ist der auf die erste Auflagefläche 6 entfallende Lastanteil eines auf den Werkstückträger 1 transportierten Werkstücks. Zur Minimierung des Gesamtwiderstandes bzw. der Gleitreibung muss der Abstand x entsprechend klein gewählt werden.

Die Rolle 10 ist derart angeordnet, dass sie die erste Auflagefläche 6 in der Zeichnungsebene nach unten etwas, in dem gezeigten Ausführungsbeispiel um weniger als 5 mm überragt, so dass der Werkstückträger 1 um die Drehachse 11 beim Transport des Werkstückträgers 1 gegen einen Stopp in Pfeilrichtung 12 verkippen kann, um somit ein erleichtertes Entlanggleiten der Förderbänder an den ersten Anlageflächen 6 zu ermöglichen. Auf die Rollen 10 entfällt dann ein grö-βerer Lastanteil, was jedoch unproblematisch ist, da die Rolle auf dem Förderband abrollen kann.

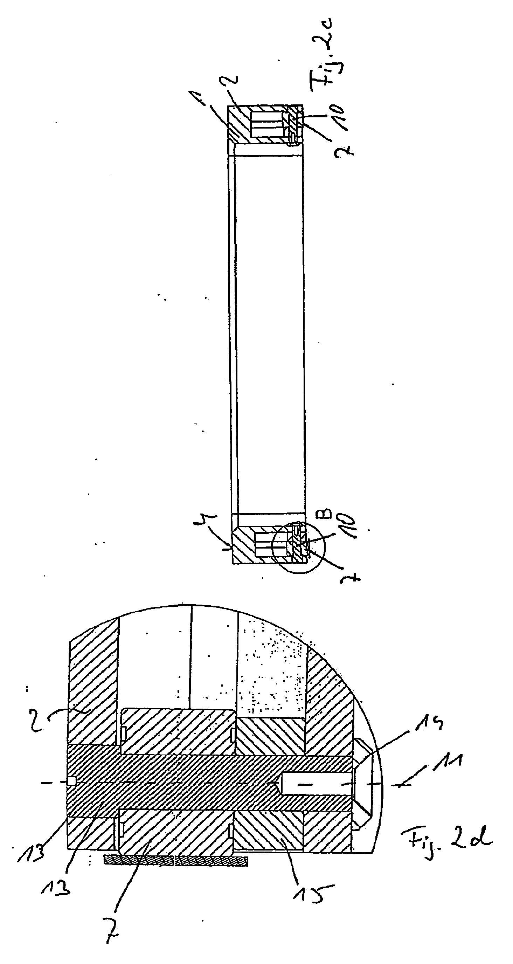

Fig. 2c zeigt eine Schnittansicht des Werkstückträgers 1 entlang der Schnittlinie A-A gemäß Fig. 2b. Zu erkennen sind die beiden drehbar gelagerten Rollen 10 zur jeweiligen Auflage auf einem Förderband. Die Unterseite der Rollen 10 bildet jeweils die zweiten Auflageflächen 7, wobei die zweiten Auflageflächen 7 weiter von der Oberseite 4 des Werkstückträgers 1 bzw. des Rahmens 2 beabstandet sind als die in Fig. 2 nicht gezeigten ersten Auflageflächen 6. Anders ausgedrückt liegen die erste und die zweite Auflagefläche 6, 10 in unterschiedlichen, jeweils den Transportrichtungsvektor aufnehmenden Ebenen.

Fig. 2d zeigt ein Teil des Werkstückträgers 1, nämlich eine Rolle 10. Diese ist um die gedachte Drehachse 11 drehbar gelagert. Die Drehachse 11 wird gebildet von einer Längsmittelachse eines von außen in den Rahmen 2 eingesteckten Fixierbolzens 13, der auf der Rahmeninnenseite von einer in den Fixierbolzen 13 hineinverschraubten Fixierschraube 14 gehalten ist. Die Rolle 10 ist dabei relativ zu dem Fixierbolzen 13 verdrehbar und stützt sich in der Zeichnungsebene rechts gleitend an einem von dem Fixierbolzen 13 durchsetzten Abstandsring 15 und in der Zeichnungsebene links an einer unteren Ringschulter eines Bolzenkopfes 16 des Fixierbolzens 13 ab. Mit dem größten Teil ihrer Radialerstreckung ist die Rolle 10 innerhalb des als Hohlrahmen ausgebildeten Rahmens 2 aufgenommen.

## Patentansprüche

1. Transportsystem, umfassend mindestens ein Förderband und mindestens einen Werkstückträger (1) mit einer ersten Auflagefläche (6) zur Auflage auf einem Förderband, wobei am Werkstückträger (1) mindestens eine zweite Auflagefläche (7) zur Auflage auf dem Förderband vorgesehen ist, welche von einer drehbar gelagerten Rolle (10) gebildet ist, und wobei der Werkstückträger (1) mittels des Förderbandes in eine Transportrichtung (8) transportierbar ist, und wobei die Rolle (10) derart relativ zur ersten Auflagefläche (6) angeordnet ist, dass der Werkstückträger (1) um eine Drehachse (11) der Rolle bei einer Relativbewegung zwischen Förderband und Werkstückträger (1) verkippbar ist,
**dadurch gekennzeichnet,**
**dass** die zweite Auflagefläche (7) in der Transportrichtung (8) vor der ersten Auflagefläche (6) angeordnet ist, und dass die erste Auflagefläche (6) von einer, in Transportrichtung (8) hinteren Unterkante (9) des Werkstückträgers (1) oder einem flächigen Unterseitenabschnitt des Werkstückträgers gebildet ist.

2. Transportsystem nach Anspruch 1,
**dadurch gekennzeichnet,**
**dass** die zweite Auflagefläche (7) aus einem Material von dem die erste Auflagefläche (6) bildenden Material unterschiedlichem Material gebildet ist.

3. Transportsystem nach einem der Ansprüche 1 oder 2,
**dadurch gekennzeichnet,**
**dass** das die erste Auflagefläche (6) bildende Material einen geringen Haftreibwert und/oder einen geringeren Gleitreibwert aufweist als das die zweite Auflagefläche (7) bildende Material.

4. Transportsystem nach einem der vorhergehenden Ansprüche,
**dadurch gekennzeichnet,**
**dass** der Werkstückträger (1) derart ausgebildet ist, dass dieser in einem Bereich zwischen der ersten und der zweiten Auflagefläche (6, 7) das Förderband nicht berührt.

5. Transportsystem nach einem der vorhergehenden Ansprüche,
**dadurch gekennzeichnet,**
**dass** die erste Auflagefläche (6) bei horizontal ausgerichtetem Werkstückträger (1) von der zweiten Auflagefläche (7) beabstandet ist.

6. Transportsystem nach einem der vorhergehenden Ansprüche,
**dadurch gekennzeichnet,**
**dass** die Drehachse (11) der Rolle (10) mit Axialabstand zur axialen Mitte des Werkstückträgers (1) und/oder zum Masseschwerpunkt des Werkstückträgers (1) angeordnet ist.

7. Transportsystem nach einem der vorhergehenden Ansprüche
**dadurch gekennzeichnet,**
**dass** der Werkstückträger (1) zur gleichzeitigen Auflage auf mindestens zwei, vorzugsweise ausschließlich zwei, parallelen Förderbändern mit jeweils mindestens einer, vorzugsweise ausschließlich einer, Rolle (10) oder mit einer den Bereich zwischen den Förderbändern überbrückenden Rolle (10) ausgebildet ist.

8. Transportsystem nach einem der vorhergehenden Ansprüche,
**dadurch gekennzeichnet,**
**dass** die erste Auflagefläche (6) von einer bei einer Relativbewegung zwischen Förderband und Werkstückträger (1) entlang des Förderbandes gleitender Fläche gebildet ist.

9. Transportsystem nach einem der vorhergehenden Ansprüche,
**dadurch gekennzeichnet,**
**dass** die erste und die zweite Auflagefläche (6, 7) im selben Abstand zu einer gedachten, eine (Vorzugs-) Transportrichtung (8) des Werkstückträgers (1) aufnehmenden Ebene oder in unterschiedlichen Abständen zu dieser Ebene angeordnet sind, vorzugsweise mit einer Abstandsdifferenz, die geringer ist als der Rollenradius.

10. Transportsystem nach einem der vorhergehenden Ansprüche,
**dadurch gekennzeichnet,**
**dass** zwei parallele in einer gemeinsamen Ebene angeordnete Förderbänder vorgesehen sind, und dass der Werkstückträger (1) gleichzeitig auf beiden Förderbändern, vorzugsweise mit jeweils einer Rolle (10), aufliegt.

11. Transportsystem nach einem der vorhergehenden Ansprüche,
**dadurch gekennzeichnet,**
**dass** eine Drehachse (11) der Rolle (10) des Werkstückträgers (1) mit Axialabstand zur axialen Mitte des Werkstückträgers (1) und/oder zum Masseschwerpunkt des, vorzugweise mit einem Werkstück beladenen, Werkstückträgers (1) angeordnet ist.

12. Transportsystem nach einem der vorhergehenden Ansprüche,
**dadurch gekennzeichnet,**
**dass** die erste und die zweite Auflagefläche (6, 7) auf einem gemeinsamen, eine Ebene definierenden Förderband, oder auf mehreren in einer gemeinsamen Ebene befindlichen Förderbändern aufliegen.

13. Transportsystem nach Anspruch 12,
**dadurch gekennzeichnet,**
**dass** die erste Auflagefläche (6) bei parallel zu der Ebene ausgerichtetem Werkzeugträger (1) zu dieser Ebene beabstandet ist.

## Claims

1. Transport system comprising at least one conveyor belt and at least one workpiece carrier (1) which comprises a first supporting surface (6) for support on a conveyor belt, at least one second supporting surface (7) for support on the conveyor belt being provided on the workpiece carrier (1), which second supporting surface is formed by a rotatably mounted roller (10), and it being possible to transport the workpiece carrier (1) in a transport direction (8) by means of the conveyor belt, and the roller (10) being arranged relative to the first supporting surface (6) in such a way that the workpiece carrier (1) can be tilted about an axis of rotation (11) of the roller in a relative movement between the conveyor belt and the workpiece carrier (1), **characterised in that** the second supporting surface (7) is arranged upstream of the first supporting surface (6) in the transport direction (8), and **in that** the first supporting surface (6) is formed by a lower edge (9) of the workpiece carrier (1) which edge is to the rear in the transport direction (8), or by a planar underside portion of the workpiece carrier.

2. Transport system according to claim 1, **characterised in that** the second supporting surface (7) is formed from a material which is different to the material which forms the first supporting surface (6).

3. Transport system according to either claim 1 or claim 2, **characterised in that** the material which forms the first supporting surface (6) has a lower friction coefficient and/or a lower slide friction coefficient than the material which forms the second supporting surface (7).

4. Transport system according to any of the preceding claims, **characterised in that** the workpiece carrier (1) is formed in such a way that it does not touch the conveyor belt in a region between the first and the second supporting surfaces (6, 7).

5. Transport system according to any of the preceding claims, **characterised in that**, in the case of a horizontally orientated workpiece carrier (1), the first supporting surface (6) is at a distance from the second supporting surface (7).

6. Transport system according to any of the preceding claims, **characterised in that** the axis of rotation (11) of the roller (10) is arranged at an axial distance from the axial centre of the workpiece carrier (1) and/or from the centre of gravity of the workpiece carrier (1).

7. Transport system according to any of the preceding claims, **characterised in that**, for simultaneous support on at least two, preferably only two, parallel conveyor belts, the workpiece carrier (1) is formed by at least one, preferably only one, roller (10) in each case or by one roller (10) which spans the region between the conveyor belts.

8. Transport system according to any of the preceding claims, **characterised in that** the first supporting surface (6) is formed by a surface which slides along the conveyor belt in a relative movement between the conveyor belt and the workpiece carrier (1).

9. Transport system according to any of the preceding claims, **characterised in that** the first and the second supporting surfaces (6, 7) are arranged at the same distance from an imaginary plane which contains a (preferred) transport direction (8) of the workpiece carrier (1) or are arranged at different distances from this plane, preferably having a difference in distance which is less than the roller radius.

10. Transport system according to any of the preceding claims, **characterised in that** two conveyor belts which are arranged so as to be parallel in a common plane are provided, and **in that** the workpiece carrier (1) is simultaneously supported on both conveyor belts, preferably by means of one roller (10) in each case.

11. Transport system according to any of the preceding claims, **characterised in that** an axis of rotation (11) of the roller (10) of the workpiece carrier (1) is arranged at an axial distance from the axial centre of the workpiece carrier (1) and/or from the centre of gravity of the workpiece carrier (1), which is preferably loaded with a workpiece.

12. Transport system according to any of the preceding claims, **characterised in that** the first and the second supporting surfaces (6, 7) are supported on a common conveyor belt defining a plane, or on a plurality of conveyor belts which are located in a common plane.

13. Transport system according to claim 12, **characterised in that** the first supporting surface (6) is at a distance from the plane when the workpiece carrier (1) is orientated parallel to this plane.

## Revendications

1. Système de transport, comprenant au moins une bande transporteuse et au moins un porte-pièce (1) avec une première surface d'appui (6) destinée à reposer sur une bande transporteuse, au moins une deuxième surface d'appui (7) étant prévue sur le porte-pièce (1) de manière à reposer sur la bande transporteuse, laquelle surface d'appui est formée par un rouleau (10) monté à rotation, et le porte-pièce (1) pouvant être transporté au moyen de la bande transporteuse dans une direction de transport (8), et le rouleau (10) étant disposé par rapport à la première surface d'appui (6) de telle sorte que le porte-pièce (1) puisse basculer autour d'un axe de rotation (11) du rouleau lors d'un mouvement relatif entre la bande transporteuse et le porte-pièce (1),
**caractérisé en ce que**
la deuxième surface d'appui (7) est disposée dans la direction de transport (8) avant la première surface d'appui (6), et **en ce que** la première surface d'appui (6) est formée par une arête inférieure (9), arrière dans la direction de transport (8), du porte-pièce (1), ou par une portion plane du côté inférieur du porte-pièce.

2. Système de transport selon la revendication 1, **caractérisé en ce que**
la deuxième surface d'appui (7) est formée d'un matériau différent du matériau formant la première surface d'appui (6).

3. Système de transport selon l'une quelconque des revendications 1 ou 2,
**caractérisé en ce que**
le matériau formant la première surface d'appui (6) présente un faible coefficient d'adhérence par friction et/ou un plus faible coefficient de glissement par friction que le matériau formant la deuxième surface d'appui (7).

4. Système de transport selon l'une quelconque des revendications précédentes,
**caractérisé en ce que**
le porte-pièce (1) est réalisé de telle sorte que celui-ci ne vienne pas en contact avec la bande transporteuse dans une région entre la première et la deuxième surface d'appui (6, 7).

5. Système de transport selon l'une quelconque des revendications précédentes,
**caractérisé en ce que**
la première surface d'appui (6) est espacée de la deuxième surface d'appui (7) lorsque le porte-pièce (1) est orienté horizontalement.

6. Système de transport selon l'une quelconque des revendications précédentes,
**caractérisé en ce que**
l'axe de rotation (11) du rouleau (10) est disposé à distance axiale par rapport au centre axial du porte-pièce (1) et/ou au centre de gravité du porte-pièce (1).

7. Système de transport selon l'une quelconque des
revendications précédentes,
**caractérisé en ce que**
le porte-pièce (1), pour l'appui simultané sur au moins deux, de préférence exclusivement deux, bandes transporteuses parallèles, est réalisé avec à chaque fois au moins une, de préférence exclusivement un, rouleau (10) ou avec un rouleau (10) surmontant la région entre les bandes transporteuses.

8. Système de transport selon l'une quelconque des revendications précédentes,
**caractérisé en ce que**
la première surface d'appui (6) est formée par une surface glissant le long de la bande transporteuse dans le cas d'un mouvement relatif entre la bande transporteuse et le porte-pièce (1).

9. Système de transport selon l'une quelconque des revendications précédentes,
**caractérisé en ce que**
la première et la deuxième surface d' appui (6, 7) sont disposées à la même distance d'un plan imaginaire recevant une direction de transport (préférentielle) (8) du porte-pièce (1), ou à des distances différentes de ce plan, de préférence avec une différence de distance qui est inférieure au rayon du rouleau.

10. Système de transport selon l'une quelconque des revendications précédentes,
**caractérisé en ce que**
deux bandes transporteuses disposées dans un plan commun sont prévues, et **en ce que** le porte-pièce (1) repose simultanément sur les deux bandes transporteuses, de préférence avec un rouleau respectif (10).

11. Système de transport selon l'une quelconque des
revendications précédentes,
**caractérisé en ce**
**qu'**un axe de rotation (11) du rouleau (10) du porte-pièce (1) est disposé à distance axiale du centre axial du porte-pièce (1) et/ou du centre de gravité du porte-pièce (1), de préférence chargé d'une pièce.

12. Système de transport selon l'une quelconque des revendications précédentes,
**caractérisé en ce que**
la première et la deuxième surface d'appui (6, 7) reposent sur une bande transporteuse commune définissant un plan, ou sur plusieurs bandes transporteuses situées dans un plan commun.

13. Système de transport selon la revendication 12,
**caractérisé en ce que**
la première surface d'appui (6), lorsque le porte-pièce (1) est orienté parallèlement au plan, est espacée par rapport à ce plan.
